# EUROPEAN PATENT SPECIFICATION

(11) **EP 0 629 580 B1**
(45) Date of publication and mention of the grant of the patent: **08.10.1997**
(21) Application number: 94303824.0
(22) Date of filing: 26.05.1994
(51) Int. Cl.: C01B 33/12, C03C 1/00

(54) **Synthetic quartz glass powder and process for producing the same**
Synthetisches Quartzglasspulver und Verfahren zu seiner Herstellung
Poudre synthétique de verre de quartz et procédé pour la préparer

(30) Priority: 27.05.1993 JP 126266/93
(43) Date of publication of application: 21.12.1994
(73) Proprietor: Mitsubishi Chemical Corporation, Chiyoda-ku Tokyo (JP)
(72) Inventor: Tamura, Minoru, Kasukabe-shi, Saitama-ken (JP); Kimura, Kazumi, Kitakyushu-shi, Fukuoka-ken (JP); Utsunomiya, Akira, Kitakyushu-shi, Fukuoka-ken (JP)
(74) Representative: Woods, Geoffrey Corlett

(56) References cited:
- EP-A- 0 486 004
- DATABASE WPI Week 8736, Derwent Publications Ltd., London, GB; AN 87-254603 & JP-A-62 176 928 (MITSUBISHI METAL KK) 3 August 1987

## Description

The present invention relates to synthetic quartz glass powder suitable for use as a raw material for ultra-high purity quartz glass products used in the field of semiconductor production, a process for producing such synthetic quartz glass powder, and to a semiconductor comprising such synthetic quartz glass powder.

Crucibles used for producing semiconductor single crystals and jigs have been manufactured by powdering natural quartz and fusing the powder. Since natural quartz, even a high quality one, contains various metallic impurities, it does not have satisfactory purity. If metallic impurities contaminate high-purity single crystals, whose importance and demand are increasing with the recent trend toward higher performance in the semiconductor industries, the performance of the semiconductors produced therefrom is adversely affected to a considerable degree, so that it is impossible to use the crucibles or jigs which have the possibility of contamination by metallic impurities. Thus, a high-purity quartz glass powder produced by synthesis has been demanded.

Recently, quartz glass produced by the sol-gel method in which an alkoxysilane is used as a raw material has been proposed as a high-purity silicate source. For instance, JP-A-62-176928 (1987) discloses a method for producing a quartz (silica) glass powder by hydrolyzing an alkoxysilane at a specified pH to prepare a gel, powdering the gel, and after drying, calcining the powder.

However, when using the obtained quartz glass powder as a raw material for glass products for semiconductors, a certain degree of fluidity is required for the transport of the powder. Also, when the quartz glass powder is fused and molded, a loss of volume inevitably takes place. It is desirable that the volumetric loss be minimized, and that the packing density thereof be close as possible to that of the conventionally used natural quartz powder. However, natural quartz powder is crystalline (α-quartz) and its theoretical density is 2.6 g/cm³, whereas synthetic quartz glass powder is amorphous and its theoretical density is only 2.2 g/cm³, so that, naturally, the packing bulk density of synthetic quartz glass powder is lower than that of natural quartz powder if the shapes and particle sizes of both powders are the same. Therefore, there has been difficult in preparing a synthetic quartz glass powder having an appropriate packing density.

It has now been found that by agitating the dry silica gel powder produced by the sol-gel method by a rotary agitator and then calcining, it is possible to obtain a synthetic quartz glass powder having a high packing bulk density which is not possessed by a conventional quartz glass powder, and also having a good fluidity. The present invention has been attained on the basis of this finding.

The present invention provides a synthetic quartz glass powder having an average particle size of 100 to 300 µm, a packing bulk density of 1.3 to 1.7 g/cm³ and an angle of repose of 30 to 40° as measured by the slanting method in an ordinary room atmosphere.

The present invention also provides a process for producing the synthetic quartz glass powder, which comprises (a) hydrolyzing an alkoxysilane to form a gel thereof, (b) finely dividing and then drying, or drying and then finely dividing, the obtained gel, and (c) (i) agitating the resulting dry powder by a rotary agitator, and calcining the agitated powder at 1,000 to 1,400°C or (ii) calcining the resulting dry powder at 1,000 to 1,400°C and agitating the calcined powder by a rotary agitator.

The present invention further provides a semiconductor comprising a fused synthetic glass powder as defined above.

The synthetic quartz glass powder has a packing bulk density and a fluidity suited for use as a material for ultra-high purity glass products.

The average particle size (diameter) of the synthetic quartz glass powder according to the present invention is 100 to 300 µm, preferably 150 to 280 µm. When the particle size is smaller than 100 µm, the powder fluidity is unsatisfactory, and when the particle size is greater than 300 µm, the fusing rate is low during fusion for crucible molding, and the packing characteristics are deteriorated. The packing bulk density of the synthetic quartz glass powder of the present invention is not less than 1.3 g/cm³. When the density is less than 1.3 g/cm³, there is excessive volume shrinkage during fusion molding, and the dimensional stability lowers. Further, the size of the mold used for fusion molding needs to be enlarged. Since the theoretical density of the synthetic quartz glass is 2.2 g/cm³, it is difficult to produce a glass powder having a packing bulk density greater than 1.7 g/cm³. The angle of repose of the synthetic quartz glass powder according to the present invention is 30 to 40°, preferably 30 to 35°. When the angle of repose is larger than 40°, the fluidity of the powder may be deteriorated which hampers its transportability.

For producing the synthetic quartz glass powder of the present invention, it is usually advantageous to employ a method in which alkoxysilane is hydrolyzed to obtain a gel and the gel is divided and calcined. Especially preferred is the method in which the silica gel obtained from hydrolysis is divided to a predetermined particle size and dried, and the dry silica gel powder is agitated by a rotary agitator. The rotary agitator usually has a closed-type rotary vessel having no agitating element. When a synthetic quartz glass powder is produced according to this method, the particle surfaces are smoothed in the course of drying and calcination, and a quartz glass powder satisfying the above-mentioned property requirements can be obtained.

The process for producing synthetic quartz glass powder according to the present invention is described in detail below.

Hydrolysis of an alkoxysilane by the sol-gel method can be accomplished by reacting an alkoxysilane with water in a known way. The alkoxysilane used as a starting material in the present invention is preferably a C₁₋₄ lower alkoxysilane such as tetramethoxysilane or tetraethoxysilane, or an oligomer thereof.

The amount of water used for the above reaction is 1 to 10 equivalents to the alkoxy groups in the alkoxysilane. If necessary, an organic solvent such as an alcohol or an ether may be added to the reaction system. The alcohols usable as the solvent in the above reaction include methanol, ethanol, propanol and butanol. As a catalyst, there can be used an acid such as hydrochloric acid or acetic acid or an alkali such as ammonia.

For obtaining a quartz glass powder with high purity, all the substances introduced into the reaction system, such as the raw material alkoxysilane, water and the solvent, should have a high purity.

In gelling the hydrolyzate, a gel can be obtained immediately on heating, but gelation takes place and is completed in several hours even when the hydrolyzate is left at normal temperature. It is possible to control the gelation time by adjusting the degree of heating. The obtained gel may be finely divided and then dried, or it may be first dried and then finely divided. The particle size of the dried silica gel powder is usually 70 to 900 µm, preferably 60 to 800 µm in diameter.

The degree of drying of the gel is usually 1 to 10% by weight in terms of H₂O content, and such drying is usually performed by heating the gel in a vacuum or in an inert gas at 100 to 200°C, preferably so that the carbon content after drying is not more than 0.2 wt%. The low carbon content minimizes the presence of black matter derived from unburnt carbon in the quartz glass molding after calcination and prevents generation of foam in the fusion molded product.

For lowering the carbon content in the molding, drying is preferably carried out by heating in an oxygen-containing gas atmosphere at a heating rate of not more than about 200°C/hr.

The thus produced dry silica gel powder is supplied into, for instance, a vertically rotatable closed-type rotary vessel having no agitating element, and the vessel is rotated to agitate the material therein. The shape of the vessel is, for example, cylindrical, V-shaped or double-conical.

The rotary agitator usually has a device for rotating the closed-type rotary vessel in the substantially vertical direction. It may additionally be provided with a device for giving a rotational force in the horizontal direction.

Examples of the vessel-rotation type rotary agitator are shown in the JSME Mechanical Engineer's Handbook, Japanese Society of Mechanical Engineering, page C1-44 (1989).

The rotating speed is usually about 2 to 30 r.p.m., although it may be changed depending on the loading and the rotor diameter of the agitator. The agitating time is preferably about 0.5 to 20 hours. When the agitating time is too short, the particles may remain substantially unchanged in shape, causing no appreciable increase of packing density. When the agitating time is too long, the particles may be powdered excessively, reducing the yield of the particles having a size in the desired range.

The rotary vessel may be of other types such as of a ball mill type.

The resulting dry silica gel powder is then calcined at 1,000 to 1,400°C to form a poreless synthetic quartz glass powder. The time for calcining is usually 1 to 100 hr.

The thus obtained synthetic quartz glass powder which has been subjected to the agitating treatment has an increased packing bulk density as compared with the quartz glass powder not subjected to the agitating treatment. This phenomenon is considered to be attributable to rounding of the particle edges by the agitating treatment, as compared with the powder particles before the agitating treatment which have very sharp edges.

In the above-described method, the agitating treatment is applied to the dry gel powder, but the agitating treatment may be conducted after calcination of the powder. It is, however, preferable to carry out the agitating treatment on a dry gel, because it is possible to obtain a powder having the desired properties in a short time due to the softness of the powder and also the chance of contamination with impurities from the rotary stirrer is minimized.

The synthetic quartz glass powder obtained in the manner described above can be used in various fields such as the preparation of quartz glass material used for the production of semiconductors, high-purity ceramic material and various types of fillers.

### EXAMPLES

The present invention is further illustrated below in the Examples.

### Example 1

Tetramethoxysilane and 5 equivalents of water were supplied into a agitating tank and stirred at 30°C for one hour to effect a hydrolysis reaction, thus obtaining a homogeneous sol solution. This solution was transferred into a vinyl chloride vat and left therein for 12 hours to effect gelation. The resulting gel was dried at 140°C for 12 hours by a vacuum dryer and then the particle size was adjusted to 100 to 500 µm. 100 kg of the thus obtained dry silica gel powder was supplied into a rotary agitator having an internal volume of 250 litres and agitated at 5 r.p.m. for 10 hours. 2 kg of the thus treated powder was supplied into a quartz glass-made vessel (200 mm × 200 mm × 150 mm) having a cover, which was set in an electric furnace, heated at a rate of 200°C/hr till it reached 1,200°C and maintained at this temperature for 20 hours. The resulting products was allowed to cool naturally and then taken from the vessel. There was obtained a synthetic quartz glass powder having an average particle size of 220 µm. 100 g of this synthetic quartz glass powder was put into a 100 ml measuring cylinder and its packing bulk density (tap density) was measured. It was 1.34 g/cm³. The angle of repose of the powder as measured by the slanting method in an ordinary room atmosphere was 35°. The synthetic quartz glass powder was filled in the hopper of a quartz crucible producing apparatus and transferred into a molding form. The operation could be performed smoothly without plugging with the powder at any part of the apparatus.

### Comparative Example 1

By following the procedure of Example 1, 2 kg of the dry silica gel powder having the particle size adjusted to 100 to 500 µm, which had not been subjected to the agitating treatment, was supplied into a quartz glass-made vessel (200 mm × 200 mm × 150 mm) having a cover. The vessel was set in an electric furnace, then heated at a rate of 200°C/hr till it reached 1,200°C and maintained at this temperature for 20 hours, followed by natural cooling. The thus obtained synthetic quartz glass powder had an average particle size of 230 µm. The packing bulk density and angle of repose of the obtained powder were measured by the same methods as used in Example 1. The results are shown in Table 1. In the same transfer test of this powder as conducted in Example 1, there was observed a slight degree of plugging with the powder at the chute.

### Comparative Example 2

A conventional synthetic quartz glass powder had its particle size adjusted to 100 to 400 µm (average particle diameter: 215 µm) and then its packing bulk density and angle of repose were measured in the same way as in Example 1. The results are shown in Table 1. In the same transfer test of this powder as conducted in Example 1, there was seen a slight degree of plugging with the powder at the chute.

**Table 1**

| | Packing bulk density (g/cm³) | Angle of repose (degree) | Average particle size (µm) |
|---|---|---|---|
| Example 1 | 1.34 | 33 | 220 |
| Comparative Example 1 | 1.12 | 42 | 230 |
| Comparative Example 2 | 1.25 | 45 | 215 |

## Claims

1. A synthetic quartz glass powder having an average particle size of 100 to 300 µm, a packing bulk density of 1.3 to 1.7 g/cm³ and an angle of repose of 30-40° as measured by the slanting method in an ordinary room atmosphere.

2. A synthetic quartz glass powder according to claim 1, wherein the average particle size is 150 to 280 µm.

3. A synthetic quartz glass powder according to claim 1 or 2, wherein the angle of repose is 30 to 35°.

4. A synthetic quartz glass powder according to any one of the preceding claims, which has a carbon content of not more than 0.2 wt%.

5. A process for producing a synthetic quartz glass powder as defined in any one of the preceding claims, which comprises:
(a) hydrolyzing an alkoxysilane to form a gel thereof,
(b) finely dividing and then drying, or drying and then finely dividing, the obtained gel,
(c)
(i) agitating the resulting dry powder by a rotary agitator and calcining the agitated powder at 1,000 to 1,400°C, or
(ii) calcining the resulting dry powder at 1,000 to 1,400°C and agitating the calcined powder by a rotary agitator.

6. A process according to claim 5, wherein the drying is performed by heating at a rate of not more than 200°C/hr in an oxygen-containing atmosphere.

7. A semiconductor comprising a fused synthetic quartz glass powder as defined in any one of claims 1 to 4.

## Patentansprüche

1. Synthetisches Quarzglaspulver mit einer durchschnittlichen Teilchengröße von 100 bis 300 µm, einer Packschüttdichte von 1,3 bis 1,7 g/cm³ und einem Schüttwinkel von 30 bis 40°, bestimmt gemäß dem Gefäll-Verfahren bei üblicher Raumatmosphäre.

2. Synthetisches Quarzglaspulver nach Anspruch 1, dadurch **gekennzeichnet,** daß die durchschnittliche Teilchengröße 150 bis 280 µm beträgt.

3. Synthetisches Quarzglaspulver nach Anspruch 1 oder 2, dadurch **gekennzeichnet,** daß der Schüttwinkel 30 bis 35° beträgt.

4. Synthetisches Quarzglaspulver nach einem der vorhergehenden Ansprüche, dadurch **gekennzeichnet,** daß es einen Kohlenstoffgehalt von nicht mehr als 0,2 Gew.-% besitzt.

5. Verfahren zur Herstellung eines synthetisches Quarzglaspulvers wie in einem der vorhergehenden Ansprüche definiert, umfassend:
(a) Hydrolyse eines Alkoxysilans unter Gelbildung davon,
(b) feines Verteilen und dann Trocknen oder Trocknen und dann feines Verteilen des erhaltenen Gels,
(c)
(i) Bewegen des entstehenden trockenen Pulvers mit einer Rotationsbewegungsvorrichtung und Calcinieren des bewegten Pulvers bei 1000 bis 1400°C oder
(ii) Calcinieren des entstehenden trockenen Pulvers bei 1000 bis 1400°C und Bewegen des calcinierten Pulvers mit einer Rotationsbewegungsvorrichtung.

6. Verfahren nach Anspruch 5, dadurch **gekennzeichnet,** daß des Trocknen mit einer Erwärmungsgeschwindigkeit von nicht mehr als 200°C/h in einer Sauerstoff-enthaltenden Atmosphäre durchgeführt wird.

7. Halbleiter, enthaltend geschmolzenes synthetisches Quarzglaspulver wie in irgendeinem der Ansprüche 1 bis 4 definiert.

## Revendications

1. Une poudre de verre de quartz synthétique ayant une taille moyenne de particules de 100 à 300 µm, une masse volumique apparente à l'état tassé de 1,3 à 1,7 g/cm³ et un angle de talus naturel de 30 à 40° tel que mesuré par la méthode d'inclinaison dans une atmosphère ambiante ordinaire.

2. Une poudre de verre de quartz synthétique selon la revendication 1, dans laquelle la taille moyenne des particules est de 150 à 280 µm.

3. Une poudre de verre de quartz synthétique selon la revendication 1 ou 2, dans laquelle l'angle de talus naturel est de 30 à 35°.

4. Une poudre de verre de quartz synthétique selon l'une quelconque des revendications précédentes, qui a une teneur en carbone non supérieure à 0,2 % en poids.

5. Un procédé de production d'une poudre de verre de quartz synthétique telle que définie dans l'une quelconque des revendications précédentes, qui consiste à :
(a) hydrolyser un alcoxysilane pour en faire un gel,
(b) diviser finement puis sécher, ou sécher puis diviser finement, le gel obtenu,
(c)
(i) agiter la poudre sèche résultante au moyen d'un agitateur rotatif, et calciner la poudre agitée entre 1000 et 1400°C ou
(ii) calciner la poudre sèche résultante entre 1000 et 1400°C et agiter la poudre calcinée au moyen d'un agitateur rotatif.

6. Un procédé selon la revendication 5, dans lequel le séchage est effectué par chauffage à une vitesse d'élévation de température ne dépassant pas 200°C/h dans une atmosphère contenant de l'oxygène.

7. Un semi-conducteur comprenant une poudre de verre de quartz synthétique telle que définie dans l'une quelconque des revendications 1 à 4 ayant été fondue.
